# EUROPEAN PATENT APPLICATION

(11) **EP 4 481 930 A1**
(43) Date of publication of application: **25.12.2024**
(21) Application number: 22951599.4
(22) Date of filing: 22.07.2022
(51) Int. Cl.: H01M 50/503, H01M 50/507, H01M 50/516, H01M 50/213

(54) **BATTERY AND ELECTRIC DEVICE**

(71) Applicant: Contemporary Amperex Technology Co., Limited, Ningde, Fujian 352100 (CN)
(72) Inventor: SUN, Zhanyu, Ningde, Fujian 352100 (CN); CHEN, Xingdi, Ningde, Fujian 352100 (CN); WANG, Peng, Ningde, Fujian 352100 (CN); QIN, Feng, Ningde, Fujian 352100 (CN); HUANG, Xiaoteng, Ningde, Fujian 352100 (CN)
(74) Representative: Gong, Jinping
(86) International application number: PCT/CN2022/107443
(87) International publication number: WO 2024/016329

(57) **Abstract**

Embodiments of the present application provide a battery (10) and a power consuming device. The battery (10) includes: a case (11); a plurality of columns of battery cells accommodated inside the case (11), wherein each of the columns of battery cells comprises a plurality of battery cells (20) arranged in a first direction, the plurality of columns of battery cells are arranged in a second direction, the second direction is perpendicular to the first direction, each of the battery cells (20) includes a first wall (201), and electrode terminals (214) are arranged on the first wall (201); and connecting strips (101), wherein the connecting strips (101) extend in the second direction and are connected to the first walls (201) of the plurality of battery cells (20) of the plurality of columns of battery cells arranged in the second direction. The technical solutions of the embodiments of the present application can increase the structural strength and energy density of the battery (10), thereby improving the performance of the battery (10).

## Description

### Technical Field

The present application relates to the technical field of batteries, and particularly to a battery and a power consuming device.

### Background Art

With the increasing environmental pollution, the new energy industry has attracted increased attention. In the new energy industry, battery technology is a key factor in its development.

The utilization rate of an internal space of a battery affects the structural strength and energy density of the battery, which in turn affects the performance of the battery. How to improve the performance of the battery is an urgent technical problem to be solved in the battery technology.

### Summary of the Invention

The present application provides a battery and a power consuming device, which can increase the structural strength and energy density of the battery, thereby improving the performance of the battery.

In a first aspect, provided is a battery, including: a case; a plurality of columns of battery cells accommodated inside the case, wherein each of the columns of battery cells includes a plurality of battery cells arranged in a first direction, the plurality of columns of battery cells are arranged in a second direction, the second direction is perpendicular to the first direction, each of the battery cells includes a first wall, and electrode terminals are arranged on the first wall; and connecting strips, wherein the connecting strips extend in the second direction and are connected to the first walls of the plurality of battery cells of the plurality of columns of battery cells arranged in the second direction.

In an embodiment of the present application, the connecting strips are connected to the first walls, on which the electrode terminals are arranged, of the plurality of battery cells of the plurality of columns of battery cells arranged in the second direction y, and the plurality of battery cells are connected as one piece by means of the connecting strips. In this case, no side plates may be arranged in the battery, and structures such as beams may no longer need to be provided, such that the utilization rate of the internal space of the battery can be greatly improved, thereby increasing the structural strength and energy density of the battery. Therefore, the performance of the battery can be improved by the technical solutions of the embodiments of the present application.

In a possible implementation, the connecting strips include intermediate connecting strips, each of the intermediate connecting strips being connected to the first walls of two adjacent battery cells of one of the columns of battery cells.

The intermediate connecting strip connects the first walls of the two adjacent battery cells of the column of battery cells, such that the two adjacent battery cells of the column of battery cells are connected, thereby increasing the structural strength of the column of battery cells.

In a possible implementation, the connecting strips include end connecting strips, each of the end connecting strips being connected to the first walls of the battery cells, at an end in the first direction x, of one of the columns of battery cells.

The end connecting strip is connected to the first walls of the battery cells, at the end in the first direction, of the group of battery cells, so as to increase the structural strength of the battery cell, at the end in the first direction, of the group of battery cells, thereby increasing the structural strength of the battery.

In a possible implementation, the intermediate connecting strip is arranged between two adjacent electrode terminals of the two adjacent battery cells.

The intermediate connecting strip is connected to the first walls of the two adjacent battery cells, the electrode terminals are arranged on the first walls, and the connecting strip is arranged between the two adjacent electrode terminals of the two adjacent battery cells such that the connecting strip is prevented from covering the electrode terminals when connecting the two adjacent battery cells, avoiding the influence on the electrical connection of the battery.

In a possible implementation, the connecting strip is a plate of a metal material. This can ensure the strength of the connecting strip.

In a possible implementation, an insulation layer is provided on a surface of the connecting strip. The provision of the insulation layer on the surface of the connecting strip can allow the surface of the connecting strip connected to the first wall to be an insulation surface.

In a possible implementation, the connecting strip is a plate of a non-metallic material.

In a possible implementation, there is a cavity provided inside the connecting strip. A first cavity may reduce the weight of the connecting strip while ensuring the strength of the connecting strip.

In a possible implementation, the cavity is configured to accommodate a heat exchange medium to adjust the temperature of the battery cells, such that the temperature of the battery cells can be effectively managed.

In a possible implementation, the connecting strip has a dimension T of 0.5-30 mm in a third direction, the third direction being perpendicular to the first direction and the second direction.

When the dimension T of the connecting strip in the third direction is too small, the connecting strip has a low rigidity and cannot effectively increase the structural strength of the battery; and when the dimension T of the connecting strip in the third direction is too large, the internal space of the battery will be occupied excessively, which is not conducive to increasing the energy density of the battery. Therefore, the dimension T of the connecting strip in the third direction is set between 0.5 and 30 mm, which can not only ensure the energy density of the battery, but also increase the structural strength of the battery.

In a possible implementation, the dimension T of the connecting strip in the third direction and the weight M of the battery cells satisfy: 0.05 mm/kg < T/M ≤ 50 mm/kg, the third direction being perpendicular to the first direction and the second direction.

When T/M is too large, loss may occur to the mass energy density of the battery, so the dimension T of the connecting strip in the third direction and the weight M of the battery cells are set to satisfy 0.05 mm/kg < T/M ≤ 50 mm/kg to ensure the mass energy density of the battery.

In a possible implementation, 0.05 mm/kg < T/M ≤ 30 mm/kg, so as to further increase the mass energy density of the battery.

In a possible implementation, the battery cell includes a second wall, the second wall is a wall of the battery cell having the largest surface area, and the second direction is perpendicular to the second wall.

The second wall of the battery cell having the largest surface area is perpendicular to the arrangement direction of the plurality of columns of battery cells and parallel to the arrangement direction of the plurality of battery cells of each column of battery cells, that is, when the plurality of battery cells of each column of battery cells are arranged, surfaces of the two adj acent battery cells having a smaller surface area are arranged facing each other, and when the plurality of columns of battery cells are arranged, the second walls of the two adjacent columns of battery cells having the largest surface area are arranged facing each other. Such an arrangement facilitates the assembly layout of the plurality of columns of battery cells and other components in the battery.

In a possible implementation, ends of the connecting strip in the second direction are fixed to the case, so as to fix the connecting strip.

In a possible implementation, the connecting strip includes a first surface and a second surface arranged opposite each other in the third direction, the first surface is connected to the first wall, and the second surface is connected to the case of the battery, the third direction being perpendicular to the first direction and the second direction.

The first surface of the connecting strip is connected to the first wall, and the second surface of the connecting strip is connected to the case, allowing the battery cell to be connected to the case via the connecting strip, such that the battery cell can be fixed, thereby increasing the structural strength of the battery.

In a possible implementation, the case includes a fixing wall, the fixing wall is connected to a third wall of each of the battery cells of the plurality of columns of battery cells, and the third wall is spaced apart from the first wall in the third direction and is opposite to the first wall, the third direction being perpendicular to the first direction and the second direction.

The fixing wall is connected to the third wall of the battery cell to fix the battery cell, so as to increase the structural strength of the battery.

In a possible implementation, when the battery is arranged in a power consuming device, the connecting strip is located below the battery cell, and the fixing wall is configured to hang the battery cell.

The connecting strip is located below the battery cell, that is, the electrode terminals of the battery cell faces downward. In the third direction, the first wall of the battery cell is below the third wall, and the fixing wall is connected to the third wall to hang the battery cell. In this case, the wall to which the electrode terminals are faced is not a stressed wall, so there is no need to leave a large gap between the wall and the electrode terminals, so as to save the space of the battery, thereby increasing the energy density of the battery.

In a possible implementation, when the battery is arranged in a power consuming device, the connecting strip is located above the battery cell, and the fixing wall is configured to support the battery cell.

The connecting strip is located above the battery cell, that is, the electrode terminal of the battery cell faces upward. In the third direction, the first wall of the battery cell is above the third wall, and the fixing wall is connected to the third wall to support the battery cell, so as to increase the structural strength of the battery.

In a possible implementation, the connecting strip is bonded to the first wall. The connecting strip is fixedly connected to the first wall by means of bonding, which provides a simple structure and is easy to machine and assembly.

In a second aspect, provided is a power consuming device, including: a battery according to the above first aspect or any possible implementation of the first aspect, the battery being configured to supply electric energy.

In the technical solutions of the present application, the connecting strips are connected to the first walls, on which the electrode terminals are arranged, of the plurality of battery cells arranged in the second direction, and the plurality of battery cells are connected as one piece by means of the connecting strips. In this case, no side plates may be arranged in the battery, and structures such as beams may no longer need to be provided, such that the utilization rate of the internal space of the battery can be greatly improved, thereby increasing the structural strength and energy density of the battery. Therefore, the performance of the battery can be improved by the technical solutions of the embodiments of the present application.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural diagram of a vehicle according to an embodiment of the present application;
FIG. 2 is a schematic structural diagram of a battery according to an embodiment of the present application;
FIG. 3 is a schematic exploded structural diagram of a battery cell according to an embodiment of the present application;
FIG. 4 is a schematic structural diagram of a battery according to an embodiment of the present application;
FIG. 5 is a schematic structural diagram of a connecting strip according to an embodiment of the present application;
FIG. 6 is a partial cross-sectional view of a battery according to an embodiment of the present application;
FIG. 7 is a partial cross-sectional view of a battery according to an embodiment of the present application; and
FIG. 8 is a partial sectional view of a battery according to an embodiment of the present application.

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that all technological and scientific terms used herein have the same meanings as those commonly understood by those skilled in the art to which the present application belongs. The terms used are merely for the purpose of describing specific embodiments, and are not intended to limit the present application. The terms "comprising" and "having" and any variations thereof in the specification and the claims of the present application and in the foregoing brief description of the drawings are intended to cover non-exclusive inclusions. The term "a plurality of" means two or more. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first" , "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application can be combined with another embodiment.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the present application, a battery cell may include a lithium-ion secondary battery, a lithium-ion primary battery, a lithium-sulfur battery, a sodium/lithium- ion battery, a sodium-ion battery or a magnesium-ion battery, etc., which is not limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which is also not limited in the embodiment of the present application.

A battery mentioned in embodiments of the present application refers to a single physical module including one or more battery cells to provide a higher voltage and capacity. For example, the battery mentioned in the present application may include a battery pack, etc. The battery generally comprises a case for packaging one or more battery cells. The case can prevent liquid or other foreign matter from affecting charging or discharging of the battery cell(s).

The battery cell includes an electrode assembly and an electrolyte solution. The electrode assembly is composed of a positive electrode plate, a negative electrode plate, and a separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive electrode tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP), polyethylene (PE), etc. In addition, the electrode assembly may be of a wound structure or a laminated structure, which will not be limited in the embodiments of the present application.

The battery may include a plurality of battery cells in order to meet different power demands, with the plurality of battery cells being in series connection, parallel connection or series-parallel connection. The series-parallel connection refers to a combination of series connection and parallel connection. Optionally, the plurality of battery cells may be in series connection or in parallel connection or in series-parallel connection to constitute a battery module, and then a plurality of battery modules may be in series connection or in parallel connection or in series-parallel connection to constitute the battery. That is, the plurality of battery cells may directly form a battery, or may form battery modules that may then form a battery. The battery is further arranged in a power consuming device to supply electric energy to the power consuming device.

For development of the battery technology, various design factors should be considered at the same time, such as energy density, cycling life, discharge capacity, charge-discharge rates and safety, etc. For a battery having a certain internal space, improving the utilization rate of the internal space of the battery is an effective means to improve the energy density of the battery. However, the structural strength of the battery may be reduced while improving the utilization rate of the internal space of the battery. For example, a beam for hanging the battery module is usually arranged inside the case of the battery, and in addition, the battery module in the battery is also provided with side plates and end plates. The beam, the side plates and the end plates also occupy the internal space of the battery while fixing the battery. However, if the beam, the side plates and the end plates are not provided, the structural strength of the battery will be insufficient and the performance of the battery will be affected.

In view of this, an embodiment of the present application provides a technical solution, in the embodiment of the present application, connecting strips are connected to first walls, on which electrode terminals are arranged, of a plurality of battery cells of a plurality of columns of battery cells arranged in a second direction, and the plurality of battery cells are connected as one piece by means of the connecting strips. In this case, no side plates may be arranged in the battery, and structures such as beams may no longer need to be provided, such that the utilization rate of the internal space of the battery can be greatly improved, thereby increasing the structural strength and energy density of the battery. Therefore, the performance of the battery can be improved by the technical solutions of the embodiments of the present application.

The technical solutions described in the embodiments of the present application are all applicable to various devices using batteries, such as mobile phones, portable apparatuses, laptops, battery cars, electric toys, electric tools, electric vehicles, ships and spacecrafts. For example, the spacecrafts include airplanes, rockets, space shuttles, space vehicles, etc.

It should be understood that the technical solutions described in the embodiments of the present application are not only applicable to the apparatuses described above, but also applicable to all apparatuses using batteries. However, for the sake of brevity of description, the following embodiments will be described by taking an electric vehicle as an example.

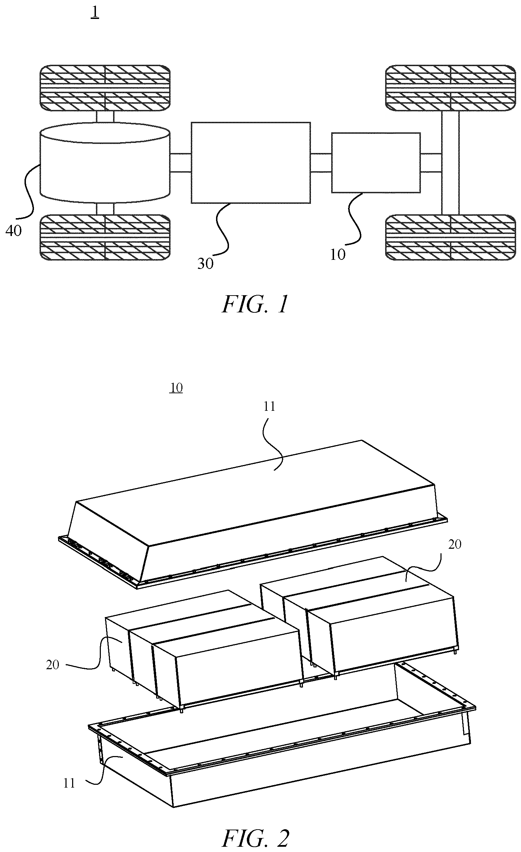

For example, FIG. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. The vehicle 1 may be internally provided with a motor 40, a controller 30 and a battery 10. The controller 30 is used for controlling the battery 10 to supply power to the motor 40. For example, the battery 10 may be arranged at the bottom, the head, or the tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

The battery 10 may include a plurality of battery cells in order to meet different power demands. For example, FIG. 2 shows a schematic structural diagram of a battery 10 according to an embodiment of the present application. The battery 10 may comprise a plurality of battery cells 20. The battery 10 may further include a case 11. The case 11 has a hollow structure inside, and the plurality of battery cells 20 are accommodated inside the case 11. For example, the plurality of battery cells 20 are in parallel connection, in series connection or in series-parallel connection, and then are placed inside the case 11.

Optionally, the battery 10 may further include other structures, which will not be described in detail herein. For example, the battery 10 may further include a bus component. The bus component is configured to achieve an electric connection, such as parallel connection, series connection, or series-parallel connection, between the plurality of battery cells 20. Specifically, the bus component may achieve an electrical connection between the battery cells 20 by connecting electrode terminals of the battery cells 20. Further, the busbar component may be fixed to the electrode terminals of the battery cells 20 by means of welding. Electric energy of the plurality of battery cells 20 may be further led out by means of an electrically conductive structure passing through a case. Optionally, the electrically conductive mechanism may also belong to the bus component.

Any number of battery cells 20 may be configured according to different power demands. The plurality of battery cells 20 may be connected in series, in parallel or in series-parallel, so as to achieve high capacity or power. Since each battery 10 may include a large number of battery cells 20, and for ease of mounting, the battery cells 20 may be provided in groups, and each group of battery cells 20 forms a battery module. The number of battery cells 20 included in the battery module is not limited and may be set according to demands. The battery may include a plurality of battery modules that may be in series connection, in parallel connection or in series-parallel connection.

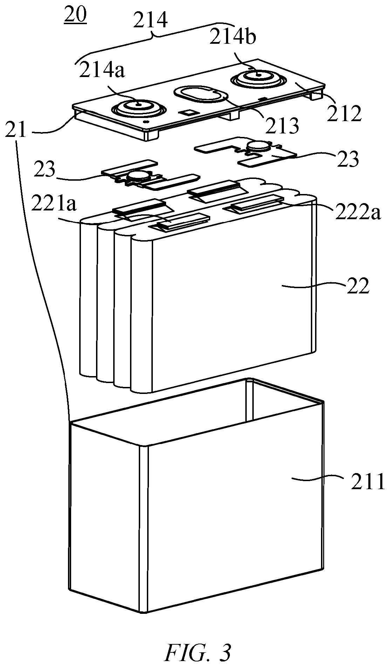

FIG. 3 shows a schematic structural diagram of a battery cell 20 according to an embodiment of the present application. The battery cell 20 comprises one or more electrode assemblies 22, a housing 211, and a cover plate 212. The housing 211 and the cover plate 212 form a shell or a battery box 21. Walls of the housing 211 and the cover plate 212 are both referred to as walls of the battery cell 20. For a cuboid battery cell 20, the walls of the housing 211 include a bottom wall and four side walls. The housing 211 may be determined depending on the shape of a combination of the one or more electrode assemblies 22. For example, the housing 211 may be a hollow cuboid, cube, or cylinder, and one of faces of the housing 211 is provided with an opening such that the one or more electrode assemblies 22 may be placed in the housing 211. For example, when the housing 211 is a hollow cuboid or cube, one of flat faces of the housing 211 is an open face, that is, this flat face has no wall body such that an interior is in communication with an exterior of the housing 211. When the housing 211 is a hollow cylinder, an end face of the housing 211 is an open face, that is, this end face has no wall body such that an interior is in communication with an exterior of the housing 211. The cover plate 212 covers the opening and is connected to the housing 211 to form an enclosed chamber for placing the electrode assemblies 22. The housing 211 is filled with an electrolyte, such as an electrolyte solution.

The battery cell 20 may further include two electrode terminals 214, and the two electrode terminals 214 may be arranged on the cover plate 212. The cover plate 212 is generally in the form of a flat plate, the two electrode terminals 214 are fixed to a flat plate face of the cover plate 212, and the two electrode terminals 214 are respectively a positive electrode terminal 214a and a negative electrode terminal 214b. Each electrode terminal 214 is correspondingly provided with a connecting member 23 which, also referred to as a current collecting member 23, is located between the cover plate 212 and the electrode assembly 22 to achieve the electrical connection between the electrode assembly 22 and the electrode terminal 214.

As shown in FIG. 3, each electrode assembly 22 is provided with a first tab 221a and a second tab 222a. The first tab 221a and the second tab 222a have opposite polarities. For example, when the first tab 221a is a positive electrode tab, the second tab 222a is a negative electrode tab. The first tab 221a of the one or more electrode assemblies 22 is connected to an electrode terminal by means of a connecting member 23, and the second tab 222a of the one or more electrode assemblies 22 is connected to another electrode terminal by means of another connecting member 23. For example, the positive electrode terminal 214a is connected to the positive tab through a connecting member 23, and the negative electrode terminal 214b is connected to the negative tab through another connecting member 23.

In the battery cell 20, according to actual usage requirements, one or more electrode assemblies 22 may be provided. As shown in FIG. 3, four independent electrode assemblies 22 are provided in the battery cell 20.

A pressure relief mechanism 213 may also be provided on the battery cell 20. The pressure relief mechanism 213 is configured to be actuated, so as to relieve an internal pressure or temperature when the internal pressure or temperature of the battery cell 20 reaches a threshold.

The pressure relief mechanism 213 may be of a variety of possible pressure relief structures, which is not limited in the embodiments of the present application. For example, the pressure relief mechanism 213 may be a temperature-sensitive pressure relief mechanism that is configured to melt when the internal temperature of the battery cell 20 provided with the pressure relief mechanism 213 reaches a threshold; and/or the pressure relief mechanism 213 may be a pressure-sensitive pressure relief mechanism that is configured to fracture when the internal pressure of the battery cell 20 provided with the pressure relief mechanism 213 reaches a threshold.

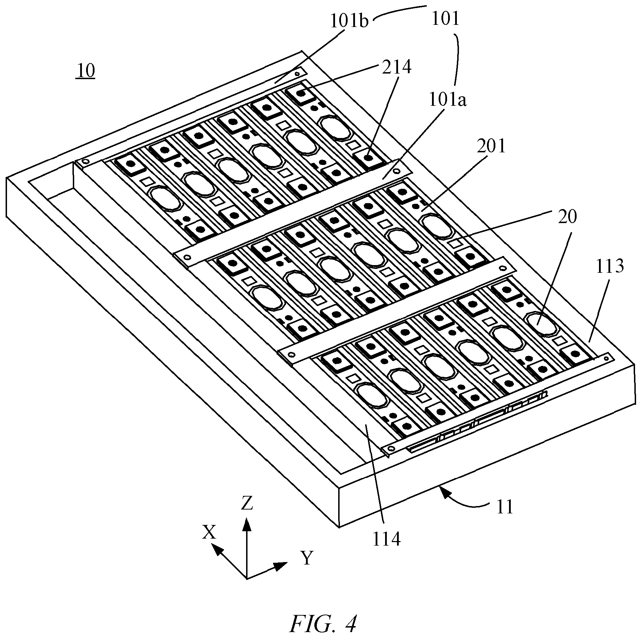

FIG. 4 shows a schematic structural diagram of a battery 10 according to an embodiment of the present application. As shown in FIG. 4, the battery 10 includes a case 11, a plurality of columns of battery cells and connecting strips 101, the plurality of columns of battery cells being accommodated inside the case 11.

Each of the columns of battery cells includes a plurality of battery cells 20 arranged in a first direction x, and the plurality of columns of battery cells are arranged in a second direction y, the second direction y being perpendicular to the first direction x.

The first direction x is the arrangement direction of the plurality of battery cells 20 in the column of battery cells in the battery 10. That is, the battery cells 20 of the column of battery cells are arranged in the direction x. The second direction y is the arrangement direction of the plurality of columns of battery cells in the battery 10. That is, the plurality of columns of battery cells in the battery 10 are arranged in the direction y.

Each of the battery cells 20 comprises a first wall 201, and electrode terminals 214 are arranged on the first wall 201. The connecting strips 101 extend in the second direction y and are connected to the first walls 201 of the plurality of battery cells 20 of the plurality of columns of battery cells arranged in the second direction y.

In an embodiment of the present application, the connecting strips 101 are connected to the first walls 201, on which the electrode terminals 214 are arranged, of the plurality of battery cells 20 of the plurality of columns of battery cells arranged in the second direction y, and the plurality of battery cells 20 are connected as one piece by means of the connecting strips 101. In this case, no side plates may be arranged in the battery, and structures such as beams may no longer need to be provided, such that the utilization rate of the internal space of the battery 10 can be greatly improved, thereby increasing the structural strength and energy density of the battery 10. Therefore, the performance of the battery 10 can be improved with the technical solutions of the embodiments of the present application.

Optionally, in an embodiment of the present application, as shown in FIG. 4, the connecting strips 101 include intermediate connecting strips 101a, each of the middle connecting strips 101a being connected to the first walls 201 of two adjacent battery cells 20 of one of the columns of battery cells.

That is, the intermediate connecting strip 101a connects the first walls 201 of the two adjacent battery cells 20 of the column of battery cells, such that the two adjacent battery cells 20 of the column of battery cells are connected, thereby increasing the structural strength of the column of battery cell column.

Optionally, in an embodiment of the present application, as shown in FIG. 4, the connecting strips 101 include end connecting strips 101b, each of the end connecting strips 101b being connected to the first walls 201 of the battery cells 20, at an end in the first direction x, of one of the columns of battery cells.

The end connecting strip 101b is connected to the first walls 201 of the battery cells 20, at the end in the first direction x, of the column of battery cells, so as to increase the structural strength of the battery cells 20, at the end in the first direction x, of the column of battery cells, thereby increasing the structural strength of the battery 10.

Optionally, in an embodiment of the present application, as shown in FIG. 4, the intermediate connecting strip 101a is arranged between two adjacent electrode terminals 214 of the two adj acent battery cells 20.

The intermediate connecting strip 101a is connected to the first walls 201 of the two adjacent battery cells 20, the electrode terminals 214 are arranged on the first walls 201, and the connecting strip 101 is arranged between the two adjacent electrode terminals 214 of the two adjacent battery cells 20 such that the connecting strip 101 is prevented from covering the electrode terminals 214 when connecting the two adjacent battery cells 20, avoiding the influence on the electrical connection of the battery 10.

Optionally, in an embodiment of the present application, each of the connecting strips 101 may be a plate of a metal material. That is, the entire connecting strip 101 is made of a metal. In this case, an insulation layer is provided on a surface of the connecting strip 101. Optionally, the insulation layer may be an insulation film bonded to the surface of the connecting strip 101 or an insulation paint coated on the surface of the connecting strip 101.

Optionally, in an embodiment of the present application, the connecting strip 101 may be a plate of a non-metallic material. That is, the entire connecting strip 101 is made of nonmetallic insulation material.

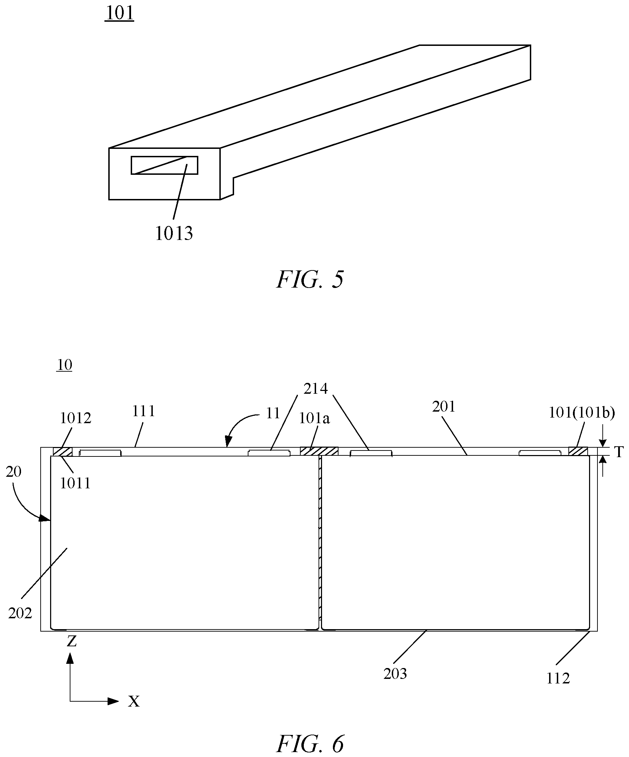

Optionally, in an embodiment of the present application, as shown in FIG. 5, there may be a cavity 1013 provided inside the connecting strip 101. The cavity 1013 may reduce the weight of the connecting strip 101 while ensuring the strength of the connecting strip 101.

Optionally, in an embodiment of the present application, the cavity 1013 may be configured to accommodate a heat exchange medium to adjust the temperature of the battery cells 20.

The heat exchange medium may be liquid, gas or solid, and adjusting the temperature refers to heating or cooling the plurality of battery cells 20. In the case of cooling the battery cells 20, the cavity 1013 may accommodate a cooling medium to adjust the temperatures of the plurality of battery cells 20. In this case, the heat exchange medium may also be called as a cooling medium, and more specifically, a cooling liquid, a cooling gas or a cooling solid. In addition, the heat exchange medium may also be configured for heating, which is not limited in the embodiments of the present application. Optionally, the heat exchange medium may circulate to achieve a better effect of temperature adjustment. Optionally, heat exchange medium may be water, a mixture of water and ethylene glycol, refrigerant, air, etc.

Optionally, in an embodiment of the present application, as shown in FIG. 6, the connecting strip 101 has a dimension T of 0.5-30 mm in a third direction z, the third direction z being perpendicular to the first direction x and the second direction y.

When the dimension T of the connecting strip 101 in the third direction z is too small, the connecting strip 101 has a low rigidity and cannot effectively increase the structural strength of the battery 10; and when the dimension T of the connecting strip 101 in the third direction z is too large, the internal space of the battery 10 will be occupied excessively, which is not conducive to increasing the energy density of the battery 10. Therefore, the dimension T of the connecting strip 101 in the third direction z is set between 0.5 and 30 mm, which can not only ensure the energy density of the battery 10, but also increase the structural strength of the battery 10.

Optionally, in an embodiment of the present application, the dimension T of the connecting strip 101 in the third direction z and the weight M of the battery cells 20 satisfy: 0.05 mm/kg < T/M ≤ 50 mm/kg.

When T/M is too large, loss may occur to the mass energy density of the battery 10, so the dimension T of the connecting strip 101 in the third direction z and the weight M of the battery cells 20 are set to satisfy 0.05 mm/kg < T/M ≤ 50 mm/kg to ensure the mass energy density of the battery 10.

Optionally, in an embodiment of the present application, the dimension T of the connecting strip 101 in the third direction z and the weight M of the battery cells 20 may further satisfy: 0.05 mm/kg < T/M ≤ 30 mm/kg, so as to further increase the mass energy density of the battery 10.

Optionally, in an embodiment of the present application, as shown in FIG. 6, the battery cell 20 includes a second wall 202, the second wall 202 is a wall of the battery cell 20 having the largest surface area, and the second direction y is perpendicular to the second wall 202.

The wall of the battery cell 20 having the largest surface area, i.e., the second wall 202, is perpendicular to the second direction y, that is, the second wall 202 is perpendicular to the arrangement direction of the plurality of columns of battery cells 20 and parallel to the arrangement direction of the plurality of battery cells 20 in each column. That is, when the plurality of battery cells 20 in each column of battery cells 20 are arranged, surfaces of the two adjacent battery cells 20 having a smaller surface area are arranged facing each other, and when the plurality of columns of battery cells 20 are arranged, the second walls 202 of the two adjacent columns of battery cells 20 that have the largest surface area are arranged facing each other. Such an arrangement facilitates the assembly layout of the plurality of columns of battery cells 20 and other components in the battery 10. For example, a water cooling plate can be arranged between two columns of battery cells 20 in such a way that the water cooling plate faces the second walls 202 of the battery cells 20, that is, faces the walls of the battery cells 20 having the largest surface area. As such, the water cooling plate has a large contact area with the battery cell 20, such that the battery 10 can be effectively thermally managed.

Optionally, in an embodiment of the present application, as shown in FIG. 4, ends of the connecting strip 101 in the second direction y are fixed to the case 11 so as to fix the connecting strip 101.

Optionally, the ends of the connecting strip 101 in the second direction y may be bonded to the case 11, so as to fix the connecting strip to the case 11. It should be understood that the ends of the connecting strip 101 in the second direction y may also be connected to the case 11 by other means, such as riveting, welding and bolting, which is not limited in the present application.

Optionally, as shown in FIG. 4, the ends of the connecting strip 101 in the second direction y may be fixed to an outer frame 113 and/or an inner beam 114 of the case 11.

Optionally, in an embodiment of the present application, as shown in FIG. 6, the connecting strip 101 includes a first surface 1011 and a second surface 1012 arranged opposite each other in the third direction z, the first surface 1011 is connected to the first wall 201, and the second surface 1012 is connected to the case 11.

Specifically, as shown in FIG. 6, the second surface 1012 may be connected to a cover 111 of the case 11.

The first surface 1011 of the connecting strip 101 is connected to the first wall 201, and the second surface 1012 of the connecting strip 101 is connected to the case 11, allowing the battery cell 20 to be connected to the case 11 via the connecting strip 101, such that the battery cell 20 can be fixed, thereby increasing the structural strength of the battery 10.

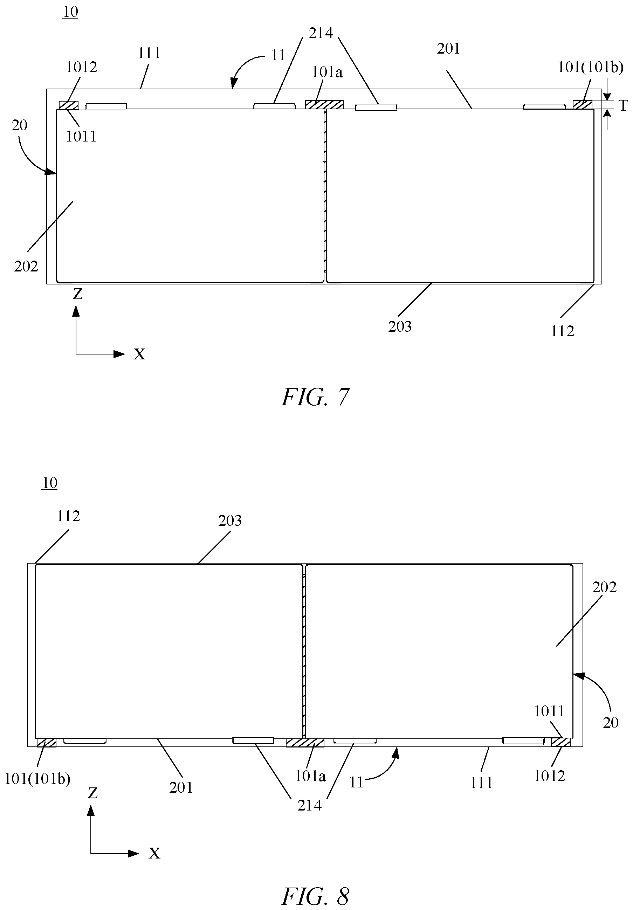

Optionally, in an embodiment of the present application, as shown in FIG. 7, the second surface 1012 may be arranged spaced apart from the cover 111 of the case 11. In this way, there is an enough gap between the electrode terminal 214 and the cover 111 to prevent the electrode terminal 214 from being damaged by collision due to a too small distance from the cover 111.

Optionally, the second surface 1012 of the connecting strip 101 is bonded to the case 11. It should be understood that the second surface 1012 of the connecting strip 101 may also be connected to the case 11 by other means, such as riveting, welding and bolting, which is not limited in the present application.

Optionally, in an embodiment of the present application, as shown in FIGS. 6, 7 and 8, the case 11 includes a fixing wall 112, the fixing wall 112 is connected to a third wall 203 of each of the battery cells 20 of the plurality of columns of battery cells, and the third wall 203 is spaced apart from the first wall 201 in the third direction z and is opposite to the first wall.

The fixing wall 112 is connected to the third wall 203 of the battery cell 20 to fix the battery cell 20, so as to increase the structural strength of the battery 10.

Optionally, in an embodiment of the present application, as shown in FIGS. 6 and 7, when the battery 10 is arranged in a power consuming device, the connecting strip 101 is located above the battery cell 20, and the fixing wall 112 is configured to support the battery cell 20.

Specifically, the connecting strip 101 is located above the battery cell 20, that is, the electrode terminals 214 of the battery cell 20 face upward. In the third direction z, the first wall 201 of the battery cell 20 is above the third wall 203, and the fixing wall 112 is connected to the third wall 203 to support the battery cell 20, so as to increase the structural strength of the battery 10.

Optionally, in an embodiment of the present application, as shown in FIG. 8, when the battery 10 is arranged in a power consuming device, the connecting strip 101 is located below the battery cell 20, and the fixing wall 112 is configured to hang the battery cell 20.

Specifically, the connecting strip 101 is located below the battery cell 20, that is, the electrode terminals 214 of the battery cell 20 face downward. In the third direction z, the first wall 201 of the battery cell 20 is below the third wall 203, and the fixing wall 112 is connected to the third wall 203 to hang the battery cell 20. In this case, the wall to which the electrode terminals 214 are faced is not a stressed wall, so there is no need to leave a large gap between the wall and the electrode terminals 214, so as to save the space of the battery 10, thereby increasing the energy density of the battery 10.

Optionally, in an embodiment of the present application, the connecting strip 101 is bonded to the first wall 201. The connecting strip 101 is fixedly connected to the first wall 201 by means of bonding, which provides a simple structure and is easy to machine and assembly.

It should be understood that the connecting strip 101 may also be connected to the first wall 201 by other means, such as riveting, welding and bolting, which is not limited in the present application.

An embodiment of the present application further provides a power consuming device. The power consuming device may include a battery 10 according to the foregoing embodiments. Optionally, the power consuming device may be a vehicle 1, a ship, a spacecraft, etc., which is not limited in the embodiments of the present application.

Hereinafter, the embodiments of the present application will be described. The embodiments described below are exemplary and are merely for explaining the present application, and should not be construed as limiting the present application. The embodiments in which techniques or conditions are not specified are based on the techniques or conditions described in documents in the art or according to the product instructions.

According to GB38031-2020, carrying out a safety test on the battery 10 that uses the battery cells 20 and the connecting strips 101 shown in the figures, and the test results are shown in Table 1.

**Table 1**

| No. | T/mm | M/Kg | T/M mm/kg | Test results |
|---|---|---|---|---|
| 1 | 0.2 | 4 | 0.05 | Fire, explosion |
| 2 | 0.2 | 5 | 0.04 | Fire, explosion |
| 3 | 1 | 5 | 0.2 | No fire, no explosion |
| 4 | 5 | 5 | 1 | No fire, no explosion |
| 5 | 10 | 2 | 5 | No fire, no explosion |
| 6 | 15 | 0.5 | 30 | No fire, no explosion |
| 7 | 5 | 2 | 2.5 | No fire, no explosion |
| 8 | 20 | 0.5 | 40 | No fire, no explosion |
| 9 | 25 | 5 | 5 | No fire, no explosion |
| 10 | 30 | 1 | 30 | No fire, no explosion |
| 11 | 25 | 0.5 | 50 | No fire, no explosion |

It can be seen from the test results that the battery 10 provided by the present application can meet the safety performance requirements.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery (10), **characterized by** comprising:
a case (11);
a plurality of columns of battery cells accommodated inside the case (11), wherein each of the columns of battery cells comprises a plurality of battery cells (20) arranged in a first direction (x), the plurality of columns of battery cells are arranged in a second direction (y), the second direction (y) is perpendicular to the first direction (x), each of the battery cells (20) comprises a first wall (201), and electrode terminals (214) are arranged on the first wall (201); and
connecting strips (101), wherein the connecting strips (101) extend in the second direction (y) and are connected to the first walls (201) of the plurality of battery cells (20) of the plurality of columns of battery cells arranged in the second direction (y).

2. The battery (10) according to claim 1, **characterized in that** the connecting strips (101) comprise intermediate connecting strips (101a), each of the intermediate connecting strips (101a) being connected to the first walls (201) of two adjacent battery cells (20) of one of the columns of battery cells.

3. The battery (10) according to claim 1 or 2, **characterized in that** the connecting strips (101) comprise end connecting strips (101b), each of the end connecting strips (101b) being connected to the first walls (201) of the battery cells (20), at an end in the first direction (x), of the columns of battery cells.

4. The battery (10) according to claim 2, **characterized in that** the intermediate connecting strip (101a) is arranged between the two adjacent electrode terminals (214) of the two adjacent battery cells (20).

5. The battery (10) according to any one of claims 1-4, **characterized in that** the connecting strip (101) is a plate of a metal material.

6. The battery (10) according to claim 5, **characterized in that** an insulation layer is provided on a surface of the connecting strip (101).

7. The battery (10) according to any one of claims 1-4, **characterized in that** the connecting strip (101) is a plate of a non-metallic material.

8. The battery (10) according to any one of claims 1-7, **characterized in that** there is a cavity (1013) provided inside the connecting strip (101).

9. The battery (10) according to claim 8, **characterized in that** the cavity (1013) is configured to accommodate a heat exchange medium to adjust the temperature of the battery cells (20).

10. The battery (10) according to any one of claims 1-9, **characterized in that** the connecting strip (101) has a dimension T of 0.5-30 mm in a third direction (z), the third direction (z) being perpendicular to the first direction (x) and the second direction (y).

11. The battery (10) according to any one of claims 1-10, **characterized in that** the dimension T of the connecting strip (101) in the third direction (z) and the weight M of the battery cells (20) satisfy: 0.05 mm/kg < T/M ≤ 50 mm/kg, the third direction (z) being perpendicular to the first direction (x) and the second direction (y).

12. The battery (10) according to claim 11, **characterized in that** 0.05 mm/kg < T/M ≤ 30 mm/kg.

13. The battery (10) according to any one of claims 1-12, **characterized in that** the battery cell (20) comprises a second wall (202), the second wall (202) is a wall of the battery cell (20) having the largest surface area, and the second direction (y) is perpendicular to the second wall (202).

14. The battery (10) according to any one of claims 1-13, **characterized in that** ends of the connecting strip (101) in the second direction (y) are fixed to the case (11).

15. The battery (10) according to any one of claims 1-14, **characterized in that** the connecting strip (101) comprise a first surface (1011) and a second surface (1012) arranged opposite each other in the third direction (z), the first surface (1011) is connected to the first wall (201), and the second surface (1012) is connected to the case (11), the third direction (z) being perpendicular to the first direction (x) and the second direction (y).

16. The battery (10) according to any one of claims 1-15, **characterized in that** the case (11) comprises a fixing wall (112), the fixing wall (112) is connected to a third wall (203) of each of the battery cells (20) of the plurality of columns of battery cells, and the third wall (203) is spaced apart from the first wall (201) in the third direction (z) and is opposite to the first wall, the third direction (z) being perpendicular to the first direction (x) and the second direction (y).

17. The battery (10) according to claim 16, **characterized in that** when the battery (10) is arranged in a power consuming device, the connecting strip (101) is located below the battery cell (20), and the fixing wall (112) is configured to hang the battery cell (20).

18. The battery (10) according to claim 16, **characterized in that** when the battery (10) is arranged in a power consuming device, the connecting strip (101) is located above the battery cell (20), and the fixing wall (112) is configured to support the battery cell (20).

19. The battery (10) according to any one of claims 1-18, **characterized in that** the connecting strip (101) is bonded to the first wall (201).

20. A power consuming device, **characterized by** comprising: a battery (10) according to any one of claims 1-19, wherein the battery (10) is configured to provide electric energy.
